(19) Europäisches Patentamt
European Patent Office
Office européen des brevets

(11) Veröffentlichungsnummer : **0 075 114 B1**

(12) **EUROPÄISCHE PATENTSCHRIFT**

(45) Veröffentlichungstag der Patentschrift :
05.06.85

(51) Int. Cl.⁴ : **A 23 L  2/26**

(21) Anmeldenummer : 82107592.6

(22) Anmeldetag : 19.08.82

(54) **Proteinhaltiges Konditionsgetränk.**

(30) Priorität : 21.09.81 DE 3137440

(43) Veröffentlichungstag der Anmeldung :
30.03.83 Patentblatt 83/13

(45) Bekanntmachung des Hinweises auf die Patenterteilung : 05.06.85 Patentblatt 85/23

(84) Benannte Vertragsstaaten :
CH DE FR GB LI

(56) Entgegenhaltungen :
FR-A- 2 303 486
GB-A- 1 308 690
NL-A- 8 005 791
US-A- 3 830 942
US-A- 3 949 098

(73) Patentinhaber : **Peter Eckes KG mit beschränkter
Haftung
Bahnstrasse 6
D-6501 Nieder-Olm (DE)**

(72) Erfinder : **Wiesenberger, Alfred
Haldeweg 29
D-6200 Wiesbaden-Sonnenberg (DE)**
Erfinder : **Kolb, Erich, Dr.
Wilhelm-Holzamer-Weg 68
D-6501 Nieder-Olm (DE)**
Erfinder : **Engelhardt, Iris, Dr.
Herderstrasse 21
D-6203 Hochheim (DE)**

(74) Vertreter : **Weickmann, Heinrich, Dipl.-Ing. et al
Patentanwälte Dipl.-Ing. H. Weickmann Dipl.-Phys.
Dr K. Fincke Dipl.-Ing. F.A. Weickmann Dipl.-Chem. B.
Huber Dr.-Ing. H. Liska Dipl.-Phys. Dr. J. Prechtel
Postfach 860820
D-8000 München 86 (DE)**

**0 075 114**

**Beschreibung**

Die vorliegende Erfindung betrifft ein proteinhaltiges Konditionsgetränk auf der Basis eines mineralstoff- und vitaminangereicherten Getränks mit hohem Fruchtsaftanteil. Unter einem Konditionsgetränk ist ein Getränk zu verstehen, das auf natürliche Weise das körperliche Leistungsvermögen reguliert, und das in gleicher Weise für Sportler und Hobbysportler geeignet ist. Zu diesem Zweck werden bereits eine ganze Reihe verschiedenartiger Getränke verwendet, die zum Teil direkt von den Trainern oder dem Sportler selbst gemischt werden.

Auf Sportplätzen sind beispielsweise wäßrige Salzlösungen verbreitet, die den bei einer andauernden körperlichen Leistung, insbesondere bei hohen Außentemperaturen zu beobachtenden Salzverlust ausgleichen. Derartigen Getränken werden mitunter noch lösliche Vitamine oder auch Stoffe wie Traubenzucker zugesetzt. Zur Geschmacksverbesserung werden derartige Getränke gelegentlich auch mit Fruchtsäften gemischt, wodurch sie den üblichen Erfrischungsgetränken auf Fruchtsaftbasis ähnlicher werden.

Aus ernährungsphysiologischen Gründen wäre es wünschenswert, wenn einem derartigen Getränk auch Proteine zugesetzt werden könnten, ohne daß das erhaltene Getränk den Charakter eines erfrischenden Getränkes verliert.

Es sind bereits eine Reihe von Versuchen unternommen worden, Getränke zusätzlich mit Proteinen anzureichern. Soweit sie den Charakter von Milchgetränken haben, ergeben sich dabei keinerlei Probleme. Im Falle von erfrischenden Getränken auf Gemüse- oder insbesondere Fruchtsaftbasis ist die Einarbeitung von Proteinen in derartige Getränke jedoch mit Schwierigkeiten verbunden, da derartige Getränke einen im Sauren liegenden pH-Wert aufweisen, was zur Folge hat, daß die Proteine von vielen auf dem lebensmitteltechnischen Sektor verwendeten Proteinzusätzen nicht in Lösung bleiben, sondern ausgefällt werden. Es sind zwar Proteine bekannt, die im sauren Bereich unter Normalbedingungen löslich sind. Es gelang aber bisher nicht, unter derartigen Proteinen eines zu finden, das in ein Konditionsgetränk eingearbeitet werden konnte, da entweder der Eigengeschmack des verwendeten Proteinzusatzes nicht mit dem gleichzeitig angestrebten Charakter eines erfrischenden Getränkes zu vereinbaren war, oder die Proteine erwiesen sich bei dem bei der Getränkeherstellung erforderlichen Erhitzen als nicht ausreichend stabil.

Lediglich im Falle eines wasserhaltigen Getränkes auf der Grundlage von Tomaten mit einem pH-Wert zwischen 4,0 und 4,5 wurde eine Proteinzusammensetzung gefunden, die geschmacklich dem besonderen Charakter eines derartigen Getränks entsprach und die eine hinreichend stabile Lösung lieferte (vgl. DE-OS 25 05 717). Diese Proteinzusammensetzung war eine Mischung bestimmter Fleischproteine mit einem teilhydrolisierten Sojaprotein. Die Möglichkeit der Verwendung einer derartigen Proteinzusammensetzung wird zum Teil auf einen lösungsstabilisierenden speziellen Effekt der verwendeten Tomaten zurückgeführt.

Aus GB-A 1 308 690 ist ein Verfahren zur Herstellung eines proteinhaltigen, leicht sauren Getränkes bekannt, das aus Fruchtsäften besteht und dem teilhydrolisiertes Sojaprotein zugesetzt wurde. Der Zusatz von Molke ist dieser Literaturstelle jedoch nicht zu entnehmen. Weiterhin ist aus USA-A 3 949 098 ein Verfahren zur Herstellung eines Orangenfruchtsaftkonzentrats bekannt, das Molkeeiweiß enthält. Dieses Orangenfruchtsaftkonzentrat ist jedoch nicht pasteurisierbar und ist nur bei Kühllagerung haltbar. Es muß unmittelbar vor dem Gebrauch durch Verdünnen mit Wasser in die verzehrfertige Form überführt werden.

Für die Einarbeitung in Getränke auf einer Fruchtsaftbasis erwiesen sich diese Proteine wie weitere etwa 80 andere untersuchte Proteinproben wie zum Beispiel verschiedene Sojaproteine, Milchproteine, Fleischproteine, Bluteiweiß, Hühnereiweiß, Kartoffeleiweiß, Algenproteine, Baumwollsameneiweiß, Fischeiweiß, KK-Proteine als ungeeignet.

Der Erfindung liegt die Aufgabe zugrunde, ein proteinangereichertes Konditionsgetränk zu schaffen, das geschmacklich den üblichen Getränken auf Fruchtsaftbasis ähnlich ist und somit geeignet ist, sich auch bei Hobbysportlern als tägliches Getränk durchzusetzen, und das ähnlich wie übliche Fruchtsäfte und Nektare durch Pasteurisation haltbar gemacht in größerem Maße hergestellt werden kann. Es soll sich ferner durch eine ausreichende Stabilität sowie durch eine gute Verträglichkeit die Voraussetzung für eine Vorbeugung eines Verlustes des körperlichen Leistungsvermögens ist, auszeichnen.

Diese Aufgabe wird erfindungsgemäß durch ein proteinhaltiges Konditionsgetränk auf der Basis eines mineralstoff- und vitaminangereicherten fruchtsafthaltigen Getränkes gelöst, das dadurch gekennzeichnet ist, daß es aus einem Anteil von 30 bis 90 Gew.-% eines Fruchtsaftes oder eines Gemisches verschiedener Fruchtsäfte entsprechend einem Feststoffgehalt von 4 bis 20 Gew.-% im Getränk, einem Anteil von 2 bis 20 Gew.-% eines Molkekonzentrats entsprechend einem Gehalt an Molkeeiweiß im Getränk von 1,2 bis 5 Gew.-%, wobei der Gehalt des Molkekonzentrats an Lactose vorher enzymatisch gespalten wurde sowie einer natürlichen Abrundungsaromatisierung, Mineralsalzen und ggf. zusätzlichem Wasser sowie einem Zusatz von Vitaminen besteht, wobei ein derartiges Getränk einen pH-Wert zwischen 4,0 und 5,0 aufweist.

Es war überraschend, daß sich bei den Untersuchungen herausstellte, daß für die Schaffung eines Konditionsgetränks mit den erwünschten Eigenschaften eines erfrischenden Getränks mit hohem

2

Fruchtsaftanteil sich auch im Handel erhältliche Molkekonzentrate eignen, wenn die in diesen Molkekonzentraten vorliegenden üblichen Lactosemengen vor der Zubereitung des Getränks enzymatisch weitestgehend in die Bestandteile der Lactose, Glucose und Galactose, gespalten worden waren. Es konnte nicht damit gerechnet werden, daß sich derartige Molkekonzentrate, deren Gehalt an Molkeeiweiß üblicherweise im Bereich von 9 bis 30 Gew.-% liegt, für die erfindungsgemäßen Konditionsgetränke eignen würden. Es war nämlich bekannt, daß die in der Kälte in Form einer Lösung vorliegenden Molkeproteine einen isoelektrischen Punkt von etwa 4,6 aufweisen, und daß sie bei diesem pH-Wert beim Erhitzen koagulieren. Da fruchtsafthaltige Getränke sehr häufig einen pH-Wert zwischen 4,0 und 5,0 aufweisen, also das ideale Milieu für die Ausfällung der Molkeproteine beim Erhitzen bilden, mußte damit gerechnet werden, daß bei dem bei der Getränkeherstellung erforderlichen abschließenden Pasteurisieren und Heißhalten die zugesetzten Proteine zumindest teilweise ausfallen würden. Überraschenderweise war das jedoch nicht der Fall, wenn der Lactosegehalt der Molkekonzentrate vorher enzymatisch gespalten worden war und ferner eine Mischung mit Fruchtsäften in den oben angegebenen Mengen gewählt wurde. Es scheint so zu sein, daß sich einerseits das besondere verwendete Protein anders als zu erwarten verhält, und daß möglicherweise auch die quantitative Zusammensetzung des ganzen Getränks, das heißt auch der Anteil an Fruchtsaft und gegebenenfalls auch der Anteil an Mineralsalzen, stabilisierend wirkt.

Es wurde ferner festgestellt, daß das spezielle verwendete Protein in Kombination mit den durch die enzymatische Spaltung erzeugten einfachen Zuckern den Fruchtsaftgeschmack des Getränks nicht beeinträchtigt oder in störender Weise überlagert, so daß das erhaltene Konditionsgetränk sehr wohlschmeckend ist. Es erwies sich ferner als haltbar, ohne daß die häufig zu beobachtenden Geschmackveränderungen eintraten, und war außerdem auch noch sehr gut verträglich. Ein unter jedem Gesichtspunkt besonders günstiges Konditionsgetränk wird dabei erhalten, wenn der Gehalt an Mokeeiweiß zwischen 1,5 und 3,5 Gew.-% liegt. Als Molkekonzentrat wird Süßmolkenkonzentrat bevorzugt. Es ist ferner vorteilhaft, sicherzustellen, daß bei der enzymatischen Spaltung der Lactose der Restgehalt an nichtgespaltener Lactose bei Werten zwischen 3,5 und 7 % liegt. Das vorzugsweise flüssige Molkekonzentrat kann teilweise durch teilhydrolysiertes Sojaprotein ersetzt werden, insbesondere wenn eine Verminderung des Zuckergehaltes gewünscht wird.

Ein besonders vorteilhaftes Konditionsgetränk enthält ferner als Fruchtsaftkomponente ein Gemisch der folgenden Fruchtsäfte in den jeweils angegebenen Mengen in Gewichtsprozent :

| | |
|---|---|
| Apfelsaft | 20 bis 70 Gew.-% |
| Passionsfruchtsaft | 1 bis 10 Gew.-% |
| Traubensaft (weiß) | 4 bis 40 Gew.-% und |
| Zitronensaft | 5 bis 25 Gew.-%. |

Besonders bevorzugte Bereiche der Mengenanteile der genannten Fruchtsaftkomponenten liegen für Apfelsaft zwischen 25 und 40 Gew.-%, für Passionsfruchtsaft zwischen 3 und 5 Gew.-%, für Traubensaft (weiß) zwischen 10 und 20 Gew.-% und für Zitronensaft ebenfalls zwischen 10 und 20 Gew.-%. Bei den genannten besonders vorteilhaften Konditionsgetränken liegt der pH-Wert bei 4,3. Außer einer natürlichen Abrundungsaromatisierung von 1 bis 10 %, bevorzugt 3 bis 5 %, sowie zusätzlichem Wasser in einer Menge von 0 bis 70 Gew.-%, bevorzugt 10 bis 30 Gew.-% enthält das erfindungsgemäße Konditionsgetränk noch Mineralsalze sowie einen Zusatz von Vitaminen. Das verwendete Mineralsalzgemisch ist ein Gemisch von physiologisch wichtigen Mineralsalzen, die in dem Getränk vorteilhafterweise in den folgenden Mengen vorliegen :

| | | | |
|---|---|---|---|
| $K^+$ | 0.028 bis 0.28 Gew.-%, | bevorzugt 0.12 — 0.15 Gew.-% ; | |
| $Na^+$ | 0.028 bis 0.28 Gew.-%, | bevorzugt 0.12 — 0.15 Gew.-% ; | |
| $Mg^{2+}$ | 0.002 bis 0.08 Gew.-%, | bevorzugt 0.008 — 0.015 Gew.-% ; | |
| $Ca^{2+}$ | 0.01 bis 0.3 Gew.-%, | bevorzugt 0.02 — 0.03 Gew.-% ; | |
| und als Anion | | | |
| $PO_4^{3-}$ | 0.006 bis 0.5 Gew.-%, | bevorzugt 0.08 — 0.1 Gew.-%. | |

In allen Fällen beziehen sich die Angaben in Gewichtsprozent auf einen Volumenteil des gesamten erfindungsgemäßen Konditionsgetränks. Mit ausreichender Näherung kann dabei ein Liter des Konditionsgetränks mit 100 Gewichtsprozent ca. 1 050 bis 1 100 g gleichgesetzt werden.

Dem Konditionsgetränk werden ferner noch Vitamine zugesetzt. Für den Zusatz von Vitaminen zu Lebensmitteln existiert eine Verordnung über vitaminierte Lebensmittel. Dem erfindungsgemäßen Konditionsgetränk werden bevorzugt mehrere oder alle zugelassenen Vitamine in der Dosierung des von der DGE empfohlenen Tagesbedarfs zugesetzt, wobei allerdings eine gewisse experimentell feststellbare Überdosis gewählt wird, die erforderlich ist, um die nicht in allen Fällen ausreichende Stabilität der Vitamine so auszugleichen, daß das fertige Getränk in 0,2 l den empfohlenen Tagesbedarf an zugelassenen Vitaminen auch noch nach längerer Lagerung enthält. Wie sich aus einer Zusammenschau der obigen Ausführungen ergibt, weist somit ein erfindungsgemäßes Konditionsgetränk in seiner bevorzugten Form eine Zusammensetzung gemäß den in der Tabelle 1 angegebenen Werten auf.

Tabelle 1

|  | Bereich | Bevorzugt |
| --- | --- | --- |
| Apfelsaft | 20-70 % | 50-65 % |
| Passionsfruchtsaft | 1-10 % | 3- 5 % |
| Traubensaft (weiß) | 4-40 % | 10-20 % |
| Zitronensaft | 5-25 % | 10-20 % |
| Molkeneiweiß, flüssig. Konz., in dem der Milchzucker gespalten ist | 2-20 % | 11-17 % |
| natürliche Abrundungsaromatisierung | 1-10 % | 3- 5 % |
| Wasser | 0-70 % | 0-30 % |
| $K^+$ | 0.028-0.28 % | 0.12-0.15 % |
| $Na^+$ | 0.028-0.28 % | 0.12-0.15 % |
| $Mg^{2+}$ | 0.002-0.08 % | 0.008-0.015 % |
| $Ca^{2+}$ | 0.01-0.3% | 0.02-0.03 % |
| P | 0.006-0.5 % | 0.08-0.1 % |
| pH | 4.2-4.4 | 4.3 |

Zusätzlich zu den angegebenen Komponenten werden noch Vitamine im Einklang mit den lebensmittelrechtlichen Vorschriften zugesetzt.

Die Herstellung des erfindungsgemäßen Konditionsgetränks erfolgt vorzugsweise so, daß getrennt voneinander einmal eine Mischung des Molkehydrolysats mit Apfelsaft sowie dem Passionsfruchtsaft und dem Traubensaft hergestellt wird, und parallel dazu eine zweite Mischung hergestellt wird, die eine Mischung von Wasser und Zitronensaft ist, in die in bestimmter Reihenfolge die Mineralsalze, das heißt das Natriumsalz, das Magnesiumsalz, das Calciumsalz und das Kaliumsalz, eingebracht werden und der ferner auch noch die Vitaminmischung zugesetzt wird. Diese zweite Mischung wird unter Rühren dem Fruchtansatz mit dem Molkehydrolysat zugesetzt, wonach die Abrundungsaromatisierung erfolgt. Nachdem die fertige Mischung hergestellt ist, wird sie pasteurisiert, heiß abgefüllt und nach einer Heißhaltezeit rückgekühlt. Bis zur Abfüllung soll die Mischung eine Standzeit von 4 Stunden nicht überschreiten. Soweit ein Wasserzusatz erfolgt, wird vorzugsweise entsalztes Wasser verwendet.

Das genaue Verfahren zur Herstellung des erfindungsgemäßen Konditionsgetränks ist auch dem nachfolgenden Beispiel zu entnehmen, in dem die Herstellung eines besonders bevorzugten Konditionsgetränks gemäß der vorliegenden Erfindung näher erläutert wird.

### Beispiel

Für die Herstellung von 1 Liter eines Konditionsgetränks gemäß der vorliegenden Erfindung wird wie folgt vorgegangen :

In 300 ml Apfelsaft werden unter Rühren zum Beispiel mit einem Leitstrahlmischer 150 ml eines flüssigen Molkekonzentrats, das einen Gehalt von etwa 12 Gew.-% Süß-Molkeeiweiß aufweist, und dessen Gehalt an Lactose vorher in bekannter Weise durch enzymatische Hydrolyse mit einem der bekannten dafür geeigneten Enzyme zur Spaltung von Disacchariden, zum Beispiel mit Lactase, bis auf einen Restgehalt von 3,5 bis 7 % Lactose in die einfachen Zucker, Glucose und Galactose gespalten worden war, so gelöst, daß weder ein Rückstand noch ein Bodensatz erhalten wird. Anschließend erfolgt unter ständigem Rühren die Zugabe von 30 ml Passionsfrucht und anschließend werden unter Fortsetzung des Rührens noch 150 ml eines weißen Traubensaftes zugesetzt. Während des gesamten Mischvorgangs zur Herstellung der eben genannten Lösung wird die Temperatur der Flüssigkeit so gesteuert, daß sie einen Maximalwert von 15 °C nicht überschreitet.

Parallel zur Zubereitung der ersten Lösung wird eine zweite Lösung bereitet, indem man zu 180 ml Wasser soviel Zitronensaft zugibt, daß der pH-Wert 2,5 bis 2,7 beträgt (ca. 150 ml). Dann werden die Mineralsalze staubfein vermahlen unter gleicher Erweiterung in geringen Dosen sehr langsam unter ständigem Rühren zugesetzt, um eine irreversible Klumpenbildung zu vermeiden. Die Mischung besteht aus Natriumsalz mit einem Gehalt von 1,4 g $Na^+$-Ionen, Magnesiumsalz mit einem Gehalt von 0,1 g $Mg^{2+}$-Ionen, Calciumsalz mit einem Gehalt von 0,26 g $Ca^{2+}$ und Kaliumsalz mit einem Gehalt von 1,4 g $K^+$-Ionen. Die Salze werden dabei so gewählt, daß gleichzeitig 0,9 g Phosphat in die Lösung eingeführt wird. Wenn sich alle Salze vollständig aufgelöst haben, und eine homogene Lösung erhalten wurde, wird diese auf eine Temperatur von mindestens 20 °C abgekühlt. Danach wird der so erhaltenen zweiten Lösung

4

eine Mischung aller für vitaminisierte Lebensmittel zugelassenen Vitamine zugesetzt. Die wie eben beschrieben getrennt zubereitete Mineralstoff/Vitaminmischung in Wasser und Zitronensaft wird unter Rühren in die erste Lösung, das heißt, den Fruchtansatz, gegeben. Nachdem die beiden Lösungen gleichmäßig vermischt sind, wird noch eine Abrundungsaromatisierung vorgenommen, mit der noch einmal etwa 50 g Pflanzenextrakte in die Mischung eingebracht werden. Es ist dabei darauf zu achten, daß die Temperatur der Mischung nie einen Maximalwert von 15 °C übersteigt.

Das Abfüllen erfolgt so, daß die fertige Mischung bei Temperaturen zwischen 75 und 90 °C pasteurisiert wird, danach bei einer Temperatur von 83 bis 87 °C in heißem Zustand abgefüllt und nach einer Heißhaltezeit von 5 bis 20 Minuten rückgekühlt wird.

Das erhaltene Produkt weist einen pH-Wert von 4,3 auf und enthält die einzelnen Bestandteile in den folgenden Mengen :

| | | |
|---|---|---|
| Apfelsaft | 30 | % |
| Passionsfruchtsaft | 3 | % |
| Traubensaft (weiß) | 15 | % |
| Zitronensaft | 15 | % |
| Flüssiges Molkekonzentrat (Gehalt an Molkeeiweiß entsprechend 2 %) | 15 | % |
| Natürliche Abrundungsaromatisierung | 5 | % |
| entsalztes Wasser | 18 | % |
| Mineralsalze : $K^+$ | 0,14 | % |
| $Na^+$ | 0,14 | % |
| $Mg^{2+}$ | 0,01 | % |
| $Ca^{2+}$ | 0,026 | % |
| P | 0,09 | % |

Vitamine pro 1 : das 5-fache des von der DGE empfohlenen Tagesbedarf plus einer aus Stabilitätsgründen nötigen Überdosierung

Das erhaltene Produkt ist eine trübstabile Flüssigkeit mit sehr angenehmen sensorischen Eigenschaften, das heißt mit einem angenehmen fruchtigen Geschmack und von einer trotz des relativ hohen Feststoffgehalts angenehmen Konsistenz, die es zu einem wohlschmeckenden Getränk mit dem Charakter eines erfrischenden Getränks machen.

**Patentansprüche**

1. Proteinhaltiges Konditionsgetränk auf der Basis eines mineralstoff- und vitaminangereicherten fruchtsafthaltigen Getränkes, dadurch gekennzeichnet, daß es aus einem Anteil von 30 bis 90 Gew.-% eines Fruchtsaftes oder eines Gemisches verschiedener Fruchtsäfte entsprechend einem Feststoffgehalt von 4 bis 20 Gew.-% im Getränk, einem Anteil von 2 bis 20 Gew.-% eines Molkekonzentrats entsprechend einem Gehalt an Molkeeiweiß im Getränk von 1,2 bis 5 Gew.-%, dessen Gehalt an Lactose enzymatisch gespalten ist, sowie einer natürlichen Abrundungsaromatisierung, Mineralsalzen und ggf. zusätzlichem Wasser sowie einem Zusatz von Vitaminen besteht, und daß es einen pH-Wert zwischen 4,0 und 5,0 aufweist.

2. Konditionsgetränk nach Anspruch 1, dadurch gekennzeichnet, daß es einen Anteil an Süß-Molkekonzentrat entsprechend einem Gehalt an Molkeeiweiß von 1,2 bis 3,5 Gew.-% aufweist.

3. Konditionsgetränk nach Anspruch 1 oder 2, dadurch gekennzeichnet, daß der Milchzucker bis auf einen Restgehalt von 3,5 bis 7 % enzymatisch in Glucose und Galactose gespalten ist.

4. Konditionsgetränk nach einem der Ansprüche 1 bis 3, dadurch gekennzeichnet, daß es ein Gemisch der folgenden Fruchtsäfte in den angegebenen Mengen enthält

| | |
|---|---|
| Apfelsaft | 20 bis 70 Gew.-% |
| Passionsfruchtsaft | 1 bis 10 Gew.-% |
| Traubensaft (weiß) | 4 bis 40 Gew.-% |
| Zitronensaft | 5 bis 25 Gew.-% |

5. Konditionsgetränk nach einem der Ansprüche 1 bis 4, dadurch gekennzeichnet, daß es einen pH-Wert von 4,2 bis 4,4 aufweist.

6. Konditionsgetränk nach einem der Ansprüche 1 bis 5, dadurch gekennzeichnet, daß es ein Gemisch an Mineralsalzen in den folgenden Mengen enthält :

| | |
|---|---|
| $K^+$ | 0.028 bis 0.28 Gew.-% |
| $Na^+$ | 0.028 bis 0.28 Gew.-% |
| $Mg^{2+}$ | 0.002 bis 0.08 Gew.-% |
| $Ca^{2+}$ | 0.01 bis 0.3 Gew.-% |
| $PO_4^{3-}$ | 0.006 bis 0.5 Gew.-% |

7. Konditionsgetränk nach einem der Ansprüche 1 bis 6, dadurch gekennzeichnet, daß es in 0,2 l Flüssigkeit maximal den empfohlenen Tagesbedarf an Vitaminen plus einem Überschuß entsprechend der begrenzten Stabilität der eingesetzten Vitamine enthält.

8. Konditionsgetränk nach einem der Ansprüche 1 bis 7, dadurch gekennzeichnet, daß das flüssige Molkekonzentrat teilweise durch teilhydrolisiertes Sojaprotein ersetzt ist.

## Claims

1. Protein-containing health drink based on a mineral- and vitamin-enriched, fruit juice-containing drink, characterised in that it consists of a proportion of 30 to 90 wt.% of a fruit juice or of a mixture of different fruit juices corresponding to a solids content of 4 to 20 wt.% in the drink, a proportion of 2 to 20 wt.% of a whey concentrate corresponding to a content of whey protein in the drink of 1.2 to 5 wt.%, the lactose content of which is enzymatically split, as well as a natural adjusting aromatisation, mineral salts and optionally additional water, as well as an addition of vitamins, and that it has a pH value between 4.0 and 5.0.

2. Health drink according to claim 1, characterised in that it has a proportion of sweet whey concentrate corresponding to a content of whey protein of 1.2 to 3.5 wt.%.

3. Health drink according to claim 1 or 2, characterised in that the milk sugar is split enzymatically to a residual content of 3.5 to 7 % into glucose and galactose.

4. Health drink according to one of claims 1 to 3, characterised in that it contains a mixture of the following fruit juices in the given amounts :

| | |
|---|---|
| apple juice | 20 to 70 wt.% |
| passion fruit juice | 1 to 10 wt.% |
| grape juice (white) | 4 to 40 wt.% |
| lemon juice | 5 to 25 wt.% |

5. Health drink according to one of claims 1 to 4, characterised in that it has a pH value of 4.2 to 4.4.

6. Health drink according to one of claims 1 to 5, characterised in that it contains a mixture of mineral salts in the following amounts :

| | |
|---|---|
| $K^+$ | 0.028 to 0.28 wt.% |
| $Na^+$ | 0.028 to 0.28 wt.% |
| $Mg^{2+}$ | 0.002 to 0.08 wt.% |
| $Ca^{2+}$ | 0.01 to 0.3 wt.% |
| $PO_4^{3-}$ | 0.006 to 0.5 wt.% |

7. Health drink according to one of claims 1 to 6, characterised in that in 0.2 l of liquid it contains at most the recommended daily requirement of vitamins plus an excess corresponding to the limited stability of the vitamins used.

8. Health drink according to one of claims 1 to 7, characterised in that the liquid whey concentrate is partly replaced by partly hydrolysed soya protein.

## Revendications

1. Boisson fortifiante contenant des protéines à base d'une boisson contenant du jus de fruit, enrichie en substances minérales et en vitamines, caractérisée en ce qu'elle est constituée d'une proportion de 30 à 90 % en poids d'un jus de fruit ou d'un mélange de différents jus de fruits correspondant à une teneur en matières solides de 4 à 20 % en poids dans la boisson, d'une proportion de 2 à 20 % en poids d'un concentré de petit-lait correspondant à une teneur en protéines de petit-lait dans la boisson de 1,2 à 5 % en poids, dont la teneur en lactose est dissociée enzymatiquement, ainsi que d'une aromatisation adoucissante naturelle, de sels minéraux et éventuellement d'eau additionnelle ainsi que d'une addition de vitamines, et en ce qu'elle présente une valeur de pH entre 4,0 et 5,0.

2. Boisson fortifiante selon la revendication 1, caractérisée en ce qu'elle présente une proportion en concentré de petit-lait doux correspondant à une teneur en protéines de petit-lait de 1,2 à 3,5 % en poids.

3. Boisson fortifiante selon la revendication 1 ou 2, caractérisée en ce que le lactose est dissocié enzymatiquement en glucose et galactose jusqu'à une teneur résiduelle de 3,7 à 7 %.

4. Boisson fortifiante selon l'une des revendications 1 à 3, caractérisée en ce qu'elle contient un mélange des jus de fruits suivants dans les quantités indiquées :

| | |
|---|---|
| jus de pomme | 20 à 70 % en poids |
| jus de fruit de la passion | 1 à 10 % en poids |
| jus de raisin (blanc) | 4 à 40 % en poids |
| jus de citron | 5 à 25 % en poids |

**0 075 114**

5. Boisson fortifiante selon l'une des revendications 1 à 4, caractérisée en ce qu'elle présente une valeur de pH de 4,2 à 4,4.

6. Boisson fortifiante selon l'une des revendications 1 à 5, caractérisée en ce qu'elle contient un mélange de sels minéraux dans les quantités suivantes :

| | |
|---|---|
| $K^+$ | 0,028 à 0,28 % en poids |
| $Na^+$ | 0,028 à 0,28 % en poids |
| $Mg^{2+}$ | 0,002 à 0,08 % en poids |
| $Ca^{2+}$ | 0,01  à 0,3 % en poids |
| $PO_4^{3-}$ | 0,006 à 0,5  % en poids |

7. Boisson fortifiante selon l'une des revendications 1 à 6, caractérisée en ce qu'elle contient, dans 0,2 l de liquide, au maximum la quantité journalière nécessaire recommandée en vitamines plus un excès selon la stabilité limitée des vitamines utilisées.

8. Boisson fortifiante selon l'une des revendications 1 à 7, caractérisée en ce que le concentré de petit-lait liquide est en partie remplacé par de la protéine de soja en partie hydrolysée.